# EUROPEAN PATENT APPLICATION

(11) **EP 1 061 518 A2**
(43) Date of publication of application: **20.12.2000**
(21) Application number: 00305101.8
(22) Date of filing: 16.06.2000
(51) Int. Cl.: G11B 23/033, G11B 23/03

(54) **Liner affixing method and apparatus**

(30) Priority: 18.06.1999 JP 17334699
(71) Applicant: SONY CORPORATION, Tokyo (JP)
(72) Inventor: Kano, Kenichi, Shinagawa-ku, Tokyo (JP); Sato, Yuji, Shinagawa-ku, Tokyo (JP)
(74) Representative: Boden, Keith McMurray

(57) **Abstract**

A method and apparatus for affixing a liner on a cartridge half, in which the time from punching the liner until bonding the liner to the cartridge half may be shortened, while contamination of the liner may be prevented. To this end, the liner affixing apparatus includes a transporting mechanism having a holding mechanism for holding a cartridge half on which a liner is to be mounted. The transporting mechanism is configured to sequentially transport a cartridge half held by the holding mechanism, a liner feed mechanism for sequentially running a liner blank so that the liner blank faces the inner surface of the cartridge half held by the holding mechanism at least at the position of punching the liner blank to a pre-set shape, and a liner punching mechanism arranged for movement in a direction substantially perpendicular to the major surface of the liner blank at the punching position. The liner punching mechanism is moved in the punching direction at the punching position to punch the liner blank to a pre-set shape. The liner punching mechanism is also moved in succession in the punching direction to arrange the liner on the inner surface of the cartridge half held by the holding mechanism.

## Description

This invention relates to a method and apparatus for affixing a liner on a cartridge half constituting a main cartridge body unit rotationally housing a disc-shaped recording medium.

In a disc cartridge rotationally housing a magnetic disc, such as a flexible magnetic disc, in a main cartridge body unit, a liner for preventing dust and dirt intruded into the main cartridge body unit from contaminating the magnetic disc is mounted on a surface of the main cartridge body unit facing the magnetic disc. This liner is prepared by punching a non-woven fabric to a size slightly larger than the outer profile of the disc and is bonded to the inner surface of each of the upper and lower cartridge halves by heating and fusing a heat-sensitive adhesive layer provided on a mounting surface thereof to the upper or lower cartridge half.

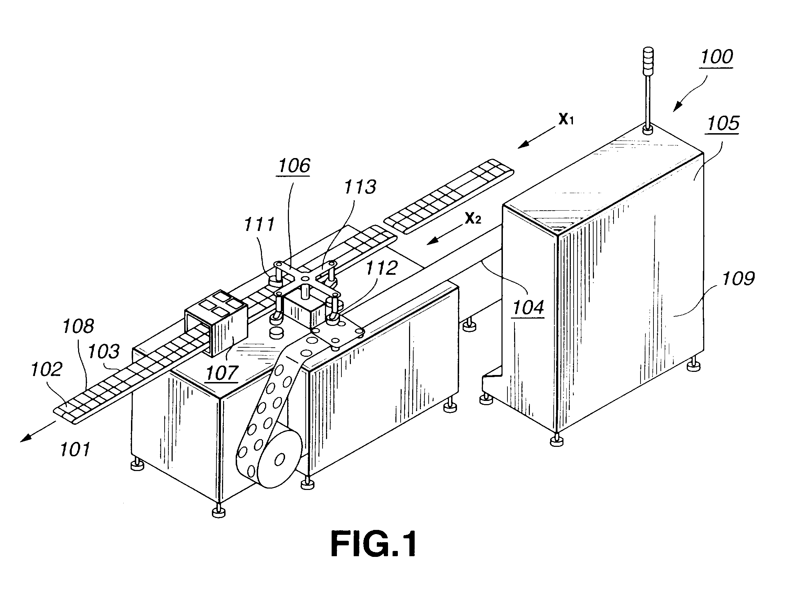

Referring to Fig. 1, a liner bonding device 100 includes a transport mechanism 103 for intermittently feeding upper and lower cartridge halves 101, 102, and a liner supplying mechanism 105 for running a liner blank 104 in a direction parallel to the transporting direction of the upper and lower cartridge halves 101, 102 transported by the transport mechanism 103. The liner bonding device 100 also includes a liner transfer mechanism 106 for punching a liner from the liner blank 104 and for transferring the liner punched from the liner blank 104 to the upper and lower cartridge halves 101, 102 transported by the transport mechanism 103, and a bonding mechanism 107 for heating and fusing the heat-sensitive bonding layers of the liner arranged on the upper and lower cartridge halves 101, 102 for bonding the liner to the upper and lower cartridge halves 101, 102.

The transport mechanism 103 for transporting the upper and lower cartridge halves 101, 102 sequentially feeds the upper and lower cartridge halves 101, 102 in the direction indicated by arrow X1 in Fig.1. This transport mechanism 103 has a holding mechanism 108 for holding the upper and lower cartridge halves 101, 102 such that the upper and lower cartridge halves 101, 102 are held by the holding mechanism 108 and transported sequentially in this state. The holding mechanism 108 is arranged for extending in a direction perpendicular to the arrow X1 direction which is the transporting direction of the upper and lower cartridge halves 101, 102. The holding mechanism 108 holds the upper cartridge half 101 on its one side, while holding the lower cartridge half 102 by its other side. Each set of the upper and lower cartridge halves is made up of the upper and lower cartridge halves 101, 102 arrayed in a direction perpendicular to the transporting direction of the upper and lower cartridge halves 101, 102, and is held in this state by the holding mechanism 108 when it is transported in the direction indicated by arrow X1 in Fig. 1.

The liner supplying mechanism 105 includes a liner blank supplying unit 109 for supplying the liner blank 104 and a take-up reel 110 for taking up the liner blank 104 from which the liner has been punched. The liner supplying mechanism 105 causes the liner blank 104 supplied from the liner blank supplying unit 109 to be wound on a take-up reel 110 to cause the liner blank 104 to run in the direction parallel to the transport direction of the upper and lower cartridge halves 101, 102 indicated by arrow X2 in Fig. 1. That is, the upper and lower cartridge halves 101, 102 and the liner blank 104 are run in the same direction in parallel with a pre-set spacing in-between. The liner blank supplying unit 109 is provided with a vibrator for shaking off foreign matter such as dust particles affixed on the liner blank 104 by vibrations. A vibrator for causing vibrations of the liner blank 104 is configured to shake off the foreign matter from the liner blank 104 sent out from the liner blank supplying unit 109 by vibrations before punching the liner.

Between the transporting mechanism 103 for transporting the upper and lower cartridge halves 101, 102 and the liner blank 104 is arranged a liner transfer mechanism 106 for punching off the liner from the liner blank 104 and for transferring the liner punched off from the liner blank 104 to the upper and lower cartridge halves 101, 102 transported on the transporting mechanism 103. This liner transfer mechanism 106 includes a punching head 111 for punching the liner blank 104 to the shape of a liner, a substantially cruciform rotary arm 113 having mounted thereon a transfer head 112 adapted for transferring the liner punched from the liner blank 114 to the upper and lower cartridge halves 101, 102 of the transporting mechanism 103 to put the liner on the upper and lower cartridge halves 101, 102, and a provisional setting table 114 for provisionally setting the liner punched off from the liner blank 104 on the upper and lower cartridge halves 101, 102. As a rotary arm 113 is run in rotation, a liner punching head 111 transfers the liner punched off from the liner blank 104 to the provisional setting table 114. The transfer head 112 transfers the liner arranged on the provisional setting table 114 to the upper and lower cartridge halves 101, 102 transported by the transporting mechanism 103.

On a downstream side of the arranging position of the transporting mechanism 103 on the upper and lower cartridge halves 101, 102 is arranged a bonding mechanism 107 for bonding the liner placed on the upper and lower cartridge halves 101, 102 to the upper and lower cartridge halves 101, 102. The bonding mechanism 107 includes a thrusting portion for thrusting the liner against the inner sides of the upper and lower cartridge halves 101, 102. On a thrusting surface of the thrusting portion, adapted for thrusting the liner, is mounted a heater for heating the thrusting surface until the heat sensitive bonding layer of the liner is fused. When the upper and lower cartridge halves 101, 102 carrying the liners thereon are transported by the transporting mechanism 103, the thrusting portion is moved in a direction towards the liner to thrust the liner against the inner surfaces of the upper and lower cartridge halves 101, 102, while heating and fusing the heat sensitive bonding layer of the liner to bond the liners to the inner surfaces of the upper and lower cartridge halves 101, 102.

In the operation of the liner bonding device 100, described above, the upper and lower cartridge halves 101, 102, held by the holding mechanism 108, are sequentially transported by the transporting mechanism 103. Simultaneously, the liner blank 104, freed of the foreign matter under the vibrations produced by the vibrator, is fed from the liner blank supplying unit 109. The liner blank 104 is sent to a liner punching position where the liners are punched off therefrom by the liner punching head 111 of the liner transfer mechanism 106. Simultaneously, a rotary arm 113 is run in rotation so that the liner punched off from the liner blank 104 is transferred by the liner punching head 111 to the provisional setting table 114. The liner arranged on the provisional setting table 114 is further transported by the transporting mechanism 103 and thrust by a thrusting head constituting the bonding mechanism 107, at the same time as the heat sensitive adhesive layer formed on the liner is fused under heating and bonded to the inner surfaces of the upper and lower cartridge halves 101, 102.

Meanwhile, in the above-described liner bonding mechanism, the rotary arm 113 of the liner transfer mechanism 106 is run in rotation after the liners have been punched off from the liner blank 104 to transfer the liner to the provisional setting table 114 from which the liners are placed on the upper and lower cartridge halves 101, 102. Thus, the liner is transferred between the liner punching position and the provisional setting table 114 and between the provisional setting table 114 and the upper and lower cartridge halves 101, 102, and hence are transferred frequently, thus producing fiber entanglements between respective liner delivery events. On the other hand, fiber fragments produced on punching from the liner blank 104 are sometimes affixed to the liner, such that the liner is occasionally arranged between the upper and lower cartridge halves 101, 102 with the attached fiber fragments attached thereto.

If a disc cartridge fitted with such liner exhibiting fiber entanglements or with a liner to which are attached fiber fragments produced on punching the liners is loaded on a recording and/or reproducing apparatus, the magnetic disc is run in rotation, and the magnetic head is brought into sliding contact with the magnetic disc, the fiber entanglements or fiber fragments become attached to the magnetic head to render it impossible to record information signals reliably on the magnetic disc or to reproduce the information signals recorded on the magnetic disc.

Moreover, in the above-described liner bonding apparatus, the transporting mechanism 103 for transporting the upper and lower cartridge halves 101, 102, the liner supplying mechanism 105 for running the liner blank 104 and the bonding mechanism 107 for bonding the liner to the upper and lower cartridge halves 101, 102 are arranged as respective separate units, so that the liner bonding apparatus 100 cannot be reduced in size. In addition, since the liner punching position is separated from the position of placing the liner on the upper and lower cartridge halves 101, 102, it is difficult to reduce time needed in the liner bonding operation.

It is therefore an aim of the present invention to provide a liner bonding method and apparatus in which it is possible to shorten the time since punching the liner until bonding thereof to the cartridge half portions and to prevent contamination in the liners.

In one aspect, the present invention provides a liner bonding apparatus including a transporting mechanism having a holding mechanism for holding a cartridge half for mounting a liner thereon, and which is configured to sequentially transport a cartridge half held by the holding mechanism, a liner feed mechanism for sequentially running a liner blank so that the liner blank will face the inner surface of the cartridge half held by the holding mechanism at least at a position of punching the liner blank to a pre-set shape, and a liner punching mechanism arranged for movement in a direction substantially perpendicular to the major surface of the liner blank at the liner blank punching position. The liner punching mechanism is moved in the direction of punching the liner blank lying at the punching position to punch the liner blank to a pre-set shape, whilst the liner punching mechanism is moved in succession in the liner blank punching direction to arrange the liner on the inner surface of the cartridge half held by the holding mechanism. With this liner bonding apparatus, in which the liner punching mechanism is arranged above the transporting mechanism, the liner blank can be punched in a direction substantially perpendicular to the major surface of the liner blank, and the liner thus punched can be mounted in succession on the inner surface of the cartridge half. Therefore, with the present liner bonding apparatus, it is possible to shorten the liner mounting time and to reduce the size and to simplify the apparatus

In another aspect, the present invention provides a liner bonding method including the steps of holding a cartridge half by a holding mechanism and sequentially transporting the cartridge half, the cartridge half being adapted to hold a liner therein, running a liner blank so that the liner blank will face the cartridge half held by the holding mechanism at a punching position of punching the liner blank to a pre-set shape, moving the liner blank punching mechanism in the punching direction of the liner blank substantially perpendicular to the major surface of the liner blank, at the punching position of punching the liner blank, for punching the liner blank, moving the punching mechanism in succession in the liner blank punching direction, after punching the liner blank to a pre-set shape, to mount the liner in the cartridge half held by the holding mechanism and partially heating and fusing in succession a heat sensitive adhesive layer formed on a mounting surface of the liner on the cartridge half, after mounting the liner by the punching mechanism on the inner surface of the cartridge half, for provisionally bonding the liner on the inner surface of the cartridge half, or heating and fusing the heat sensitive adhesive layer to ultimately bond the liner on the inner surface of the cartridge half. With this liner bonding method, in which the step of punching a liner from the liner blank and the step of mounting the punched liner on the inner surface of the cartridge half can be executed in succession, it becomes possible to shorten the liner punching and bonding time.

According to the present invention, in which the punching head is mounted at the position of punching the liner blank for movement in a direction perpendicular to the major surface of the liner blank, punching a liner and mounting the punched liner in the cartridge half can be performed in succession to reduce the time needed in punching the liner and mounting the punched liner. In addition, the liner punching mechanism is arranged above the transporting mechanism to reduce the size of the entire apparatus.

Preferred embodiments of the present invention will now be described hereinbelow by way of example only with reference to the accompanying drawings, in which:

Fig. 1 is a perspective view showing a conventional liner bonding apparatus.

Fig.2 is an exploded perspective view of a disc cartridge.

Fig.3 is a cross-sectional view showing portions of the disc cartridge.

Fig.4 is a perspective view showing a liner bonding apparatus according to the present invention.

Fig.5 is a perspective view showing portions of a transporting mechanism for transporting the upper and lower cartridge halves making up the liner bonding apparatus.

Fig.6 is a cross-sectional view of a liner blank punching mechanism making up the liner bonding apparatus.

Fig.7 is a perspective view showing a holding head adapted to hold the liners punched off by a metal mold mechanism and which is mounted on the liner arranging portions of the upper and lower cartridge halves.

Fig.8 is a nersnective view showing a holding head arranged in the liner arranging portions of the upper and lower cartridge halves.

Fig.9 is a side view showing a bonding mechanism for ultimately bonding the liners to the liner arranging portions of the upper and lower cartridge halves.

Fig.10 is a perspective view showing a welding head used for ultimately bonding the liner.

Fig. 11 is a schematic side view showing the liner bonding apparatus prior to punching the liners from the liner blank.

Fig.12 is a schematic side view showing the liner bonding apparatus when the liners have been punched from the liner blank and arranged in the liner arranging portions of the upper and lower cartridge halves.

Fig.13 is a schematic side view showing the liner bonding apparatus when the liners have been provisionally bonded to the liner arranging portions of the upper and lower cartridge halves.

Fig.14 is a schematic side view showing the liner bonding apparatus when the liners have been ultimately bonded to the liner arranging portions of the upper and lower cartridge halves.

Fig. 15 is a schematic side view showing the liner bonding apparatus when the step of ultimately bonding the liners to the liner arranging portions of the upper and lower cartridge halves has been brought to a close.

Referring to the drawings, a liner bonding apparatus for bonding a liner according to the present invention to the upper and lower cartridge halves making up the disc cartridge and a liner bonding method employing this liner bonding apparatus will be explained in detail.

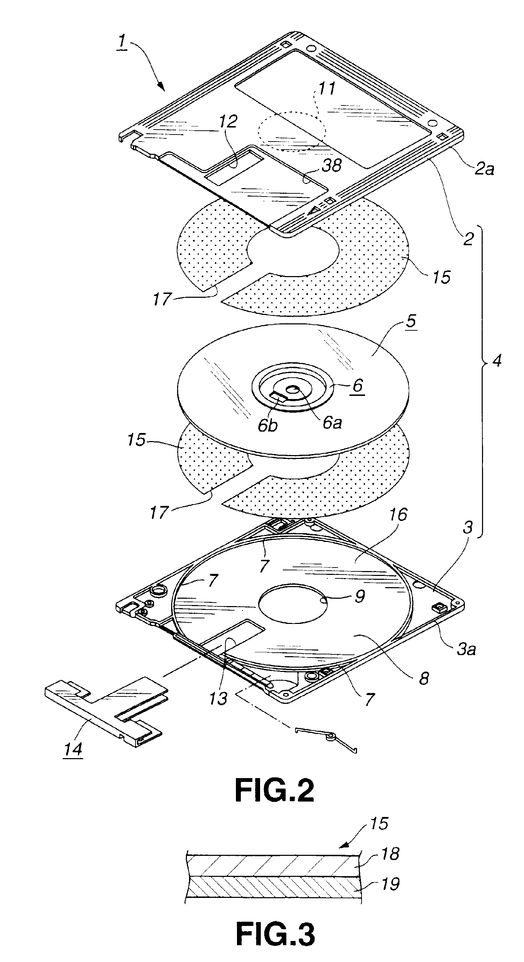

Before proceeding to the description of the liner bonding apparatus and the liner bonding method employing this liner bonding apparatus, a disc cartridge 1, on the upper and lower cartridge halves of which the liner is attached, is explained with reference to Fig.2. The disc cartridge 1 comprises a main cartridge body unit 4 made up of upper and lower cartridge halves 2, 3 abutted and unified to each other, as shown in Fig.2. Within the main cartridge body unit 4 is housed a magnetic disc 5 configured for recording information signals thereon. The magnetic disc 5 has a diameter of 3.5 inch and a recording capacity of hundreds of Mbytes. On both sides ofa flexible film-shaped disc substrate of the magnetic disc 5 are fonned magnetic layers operating as signal recording layers. The magnetic disc 5 has a center core 6 within which is fitted a center core 6 formed of a magnetic material, for example, as a metal plate. In the center core 6 is formed a substantially square-shaped center engagement opening 6a engaged by a spindle of a disc rotating driving unit adapted for rotating the magnetic disc 5. At a position of the center core 6 offset a pre-set distance from the engagement opening 6a is bored a substantially rectangular driving pin inserting opening 6b into which is inserted a driving pin of the disc rotating driving unit.

The main cartridge body unit 4 is made up of an upper cartridge half 2 and a lower cartridge half 3 which are formed on injection molding a synthetic resin material such as acrylonitrile butyl styrene (ABS). On the facing inner surfaces of the upper and lower cartridge halves 2, 3 are formed substantially arcuately-shaped partitioning wall sections 7, 7 circumscribing upstanding peripheral wall sections 2a, 3a set upright on the perimetral portions of the upper and lower cartridge halves 2, 3. When the upper and lower cartridge halves 2, 3 are abutted together, the partitioning wall sections 7, 7 formed on the upper and lower cartridge halves 2, 3 make up a disc housing section 8 adapted for rotatably housing the magnetic disc 5.

In the mid portion of the lower cartridge half 3 constituting the lower surface of the main cartridge body unit 4 is bored a circular center opening 9 via which the center core 6 mounted on the magnetic disc 5 housed in the main cartridge body unit 4 is exposed to outside. The center opening 9 is formed only in the lower cartridge half 3, whilst the center portion on the upper surface of the main cartridge body unit 2 constituted by the upper cartridge half 2 is closed. The center portion of the upper cartridge half 2 is provided with a center plate 11 which, when the disc cartridge 1 is loaded on the recording and/or reproducing apparatus, compresses against the distal end of a spindle of the disc rotating driving unit inserted into the engagement opening 6a of the center core 6. In a facing position of the upper cartridge half 2 constituting the upper surface of the main cartridge body unit 4 and the lower cartridge half 3 are formed first and second recording and/or reproducing openings 12, 13 via which at least portions of the signal recording area of the magnetic disc housed in the main cartridge body unit 4 are exposed to outside along the radius of the magnetic disc. These first and second recording and/or reproducing openings 12, 13 are substantially rectangular in profile and are extended from the vicinity of the center opening 9 to a mid position in the left-and-right direction on the front surface operating as an intruding end of the main cartridge body unit 4 into the recording and/or reproducing apparatus.

The first and second recording and/or reproducing openings 12, 13 are closed by a shutter member 14 mounted for movement on the front surface of the main cartridge body unit 4. This shutter member 14 opens the first and second recording and/or reproducing openings 12, 13 only when the main cartridge body unit 4 is loaded on the recording and/or reproducing apparatus. During the non-using tune when the main cartridge body unit is not loaded on the recording and/or reproducing apparatus, the shutter member 14 operates for preventing foreign matter, such as dust and dirt, from being intruded into the inside of the disc housing section 8.

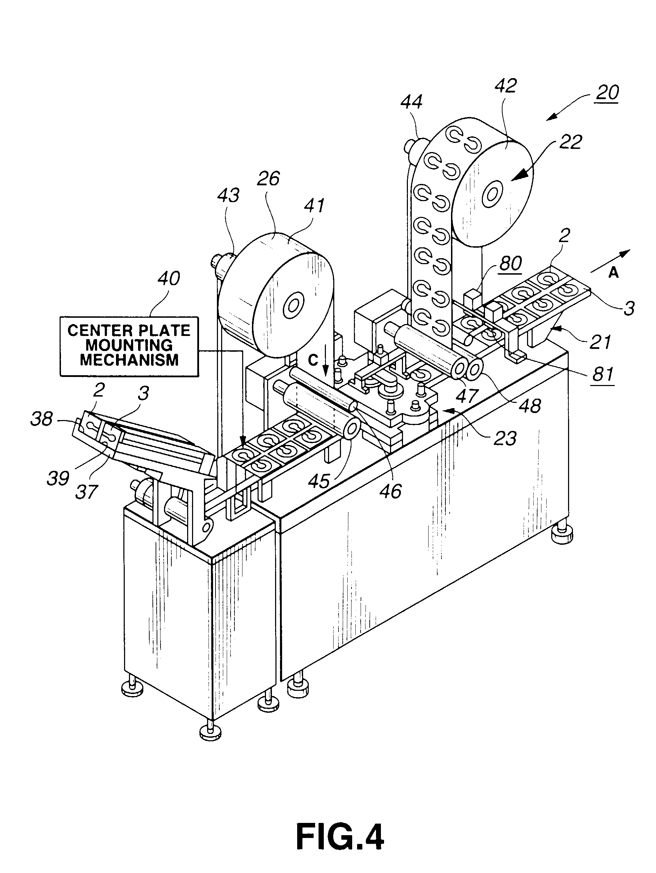

On the inner surfaces of the upper and lower cartridge halves 2, 3 are formed liner arranging potions 16, 16 in which are arranged liners 15, 15 adapted for protecting the magnetic disc 5 housed in the disc housing section 8 and for cleaning the magnetic disc 5. The liner arranging potions 16, 16 are formed as planar surfaces. The liners 15, 15, arranged on the liner arranging potions 16, 16, are sized to be large enough to cover the major surface of the magnetic disc 5 and is punched to a ring shape. The liners 15, 15 are formed with cut-outs 17, 17 in register with the first and second recording and/or reproducing openings 12, 13. The liners 15, 15 are constituted by layering a heat-sensitive adhesive layer 19 on one surface of a main body portion of the liner 18 fonned by non-woven cloth formed mainly of cellulose, such as rayon (trade name), as shown in Fig.3. The heat-sensitive adhesive layer 19 is used for bonding the liners 15, 15 on the inner surfaces of the upper and lower cartridge halves 2, 3, and is formed by coating one of the major surfaces of the main body portion of the liner 18 with a high molecular weight material exhibiting heat-sensitive adhesive properties, such as ethylene vinyl acetate or polyethylene terephthalate (PET). The liners 15, 15 are bonded to the liner arranging potions 16, 16 formed on the upper and lower cartridge halves 2, 3 by the liner bonding apparatus 20 according to the present invention.

During non-use time of the above-described disc cartridge 1, the shutter member 14 is in the position of closing the first and second recording and/or reproducing openings 12, 13 to prevent dust particles from entering the inside of the disc housing section 8 through the first and second recording and/or reproducing openings 12, 13. When the disc cartridge 1 is loaded on the recording and/or reproducing apparatus, with the front surface of the main cartridge body unit 4 as the intruding end, the shutter member 14 is moved by the shutter opening mechanism of the recording and/or reproducing apparatus to open the first and second recording and/or reproducing openings 12, 13. The spindle of the disc rotating driving unit provided on the recording and/or reproducing apparatus is engaged in the engagement opening 6a and the driving pin is engaged in the driving pin inserting opening 6b to cause rotation of the magnetic disc 6. The magnetic head of the recording and/or reproducing mechanism is intruded through the first and second recording and/or reproducing openings 12, 13 to cause the magnetic head to record and/or reproduce information signals on or from the rotating magnetic disc 5.

The liner bonding apparatus 20 for bonding the liners 15, 15 to the liner arranging potions 16, 16 arranged on the inner surfaces of the upper and lower cartridge halves 2, 3 in manufacturing the disc cartridge 1 described above includes a transporting mechanism 21 for transporting the upper and lower cartridge halves 2, 3 making up the main cartridge body unit 4, a liner blank feed mechanism 22 for running a liner blank 26 of the liner 15, and a liner punching mechanism 23 for punching the liner 15 from the liner blank 26 and for arraying the liners 15 on the liner arranging potions 16, 16 of the upper and lower cartridge halves 2, 3, as shown in Fig.4. It is noted that the liner blank 26 is run by a liner blank feed mechanism 23 as it faces the upper and lower cartridge halves 2, 3 at a position of punching the liners 15 from the liner blank 26. It is at this position that the liners 15 are punched by the liner blank feed mechanism 23. That is, the liner blank 26 is run at the liner punching position so that the major surface of the liner blank 26 faces the upper and lower cartridge halves 2, 3, with the liner blank feed mechanism 23 of the liner bonding apparatus 20 lying above the liner punching position to reduce the overall size of the apparatus. Also, the liners 15 punched from the liner blank 26 are arranged in the liner arranging potions 16, 16 of the upper and lower cartridge halves 2, 3 in continuation to the punching of the liner blank 26 to reduce the liner mounting time.

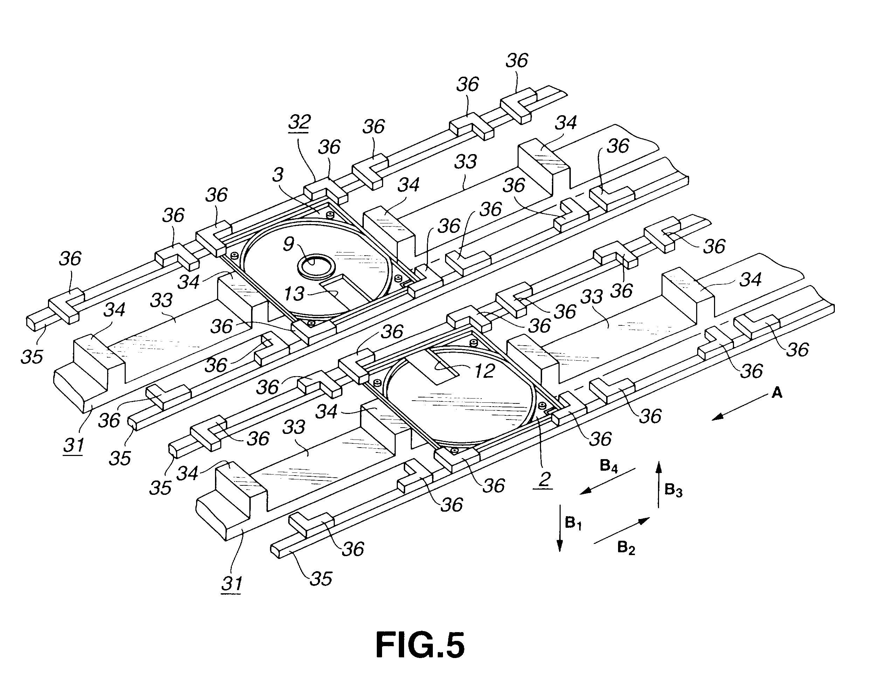

The transporting mechanism 21 for transporting the upper and lower cartridge halves 2, 3 making up the main cartridge body unit 4 includes transporting members 31, 31 for transporting the upper and lower cartridge halves 2, 3, and holding units 32, 32 for holding the upper and lower cartridge halves 2, 3 transported in position, as shown in Figs.4 and 5. The transporting mechanism 21 transports the upper and lower cartridge halves 2, 3 as these are arrayed in a direction substantially perpendicular to the transporting direction in the direction indicated by arrow A in Fig.5. The transporting members 31, 31 transporting the upper and lower cartridge halves 2, 3 comprise a transporting member for transporting the upper cartridge half 2 and another transporting member arranged parallel to the first-stated transporting member for transporting the lower cartridge half 3. The transporting members 31, 31 are each made up of a supporting member 33 for supporting the main cartridge body unit 4 by an elongated member for supporting the main cartridge body unit 4, with the elongate member being of a width sufficient to support the upper and lower cartridge halves 2, 3, and a positioning projection 34 for positioning the transported upper and lower cartridge halves 2, 3. The supporting member 33 is of a width at least sufficient to support the upper and lower cartridge halves 2, 3 and is designed so that the spacing between the positioning projections 34 will be equal to the length between the lateral sides of the upper and lower cartridge halves 2, 3. That is, the neighboring positioning projections 34, 34 define a planar recess as a bottom surface. The supporting member 33 supports the upper and lower cartridge halves 2, 3 with the major surfaces of the upper and lower cartridge halves 2, 3 facing downwards and with the liner arranging potions 16, 16 provided on the inner surfaces of the upper and lower cartridge halves 2, 3 facing upwards. The positioning projections 34, 34 constituting the supporting members 33, 33 are set so as to be at least higher in level than the height of the upstanding peripheral wall sections 2a, 3a of the upper and lower cartridge halves 2, 3 The transporting members 31, 31 provided with the plural supporting members 33, 33 and the positioning projections 34, 34 are moved cyclically in Fig.5 by a driving mechanism, not shown, in the direction indicated by arrows B1 to B4 in Fig.5.

The holding units 32, 32 holding in position the upper and lower cartridge halves 2, 3 transported by the transporting members 31, 31 includes a pair of rails 35, 35 provided for extending substantially parallel to the transporting members 31, 31 and holding units 36, 36 formed on these rails 35, 35 for holding the main cartridge body unit 4, as shown in Fig.5. The rails 35, 35 are arranged for sandwiching the transporting members 31, 31 in-between. Each rail 35 is provided with the holding units 36, 36 at each corner of the upper and lower cartridge halves 2, 3 for holding the corners of the upper and lower cartridge halves 2, 3. The holding units 36, 36 are each substantially L-shaped and four of the holding units 36 are grouped as a set to hold the respective corners of the upper and lower cartridge halves 2, 3.

The cartridge transporting mechanism is arranged so that the transporting members 31, 31 are cyclically moved in the sequence indicated by arrows B1 to B4 in Fig.4, in this order, with the transporting members 31, 31 as the movable side and with the holding units 32, 32 as the stationary side, to transport the upper and lower cartridge halves 2, 3 intermittently in the direction indicated by arrow A in Fig.5. First, the transporting members 31, 31 are lowered in the direction indicated by arrow B1 in Fig.3, with respect to the rails 35, 35, and subsequently are moved in the direction indicated by arrow B2 in Fig,5, so as to be then raised in the direction indicated by arrow B3 in Fig.5, to support the upper and lower cartridge halves 2, 3 held by the upstream side holding units 36, 36. By the transporting members 31, 31 being moved in the direction indicated by arrow B4 in Fig.4, which is the same as the transporting direction of the upper and lower cartridge halves 2, 3, with the transporting members 31, 31 being then again lowered int B1 in Fig.4, the upper and lower cartridge halves 2, 3 are held by the downstream side holding units 36, 36. This transports the upper and lower cartridge halves 2, 3 intermittently in the direction indicated by arrow A1 in Figs.4 and 5.

At the inchoate end of the transporting mechanism 21, there is arranged a cartridge half supplying mechanism 37 adapted to supply the upper and lower cartridge halves 2, 3 to the transporting mechanism 21, as shown in Fig.4. The cartridge half supplying mechanism 37 is arranged with the inchoate end of the transporting mechanism 21 as the lower side, and includes an upper cartridge half housing section 38 housing the upper cartridge halves 2 in a stacked state in the transporting direction of the lower cartridge half 3 and a lower cartridge half housing section 39 housing the lower cartridge halves 3 in a stacked state in the transporting direction of the lower cartridge half 3. The lowermost upper and lower cartridge halves 2, 3 in the upper and lower cartridge half housing sections 38, 39 are held by suction by a transfer mechanism having a suction unit, not shown, adapted for holding the upper and lower cartridge halves 2, 3 housed in the upper and lower cartridge halfhousing sections 38, 39, and are transferred one-by-one to the transporting mechanism 21.

On the other hand, when the upper and lower cartridge halves 2, 3 are transferred by the cartridge half supplying mechanism 37, and the upper and lower cartridge halves 2, 3 are transferred by the transporting mechanism 21 in the direction indicated by arrow A in Fig.1, the center plate 11 is mounted by a center plate mounting mechanism 40 at a position of the upper cartridge half 2 transported by the transporting mechanism 21 facing the center opening 9 of the lower cartridge half 3. The center plate mounting mechanism 40 includes a center plate forming portion, for punching the center plate 11, and a transfer portion for transferring the center plate formed by the center plate forming portion to the upper cartridge half 2 transported to the transporting mechanism 21. The center plate 11 formed by punching in the center plate forming portion is transferred to the upper cartridge half transported to the transporting mechanism 21 by the transfer unit and is mounted on the inner surface of the upper cartridge half 2.

Meanwhile, the liner bonding apparatus 20 includes a liner blank feed mechanism 22 for running the liner blank 26 in a facing relationship to the upper and lower cartridge halves 2, 3 transported by the transporting mechanism 21, as shown in Fig.4. The liner blank feed mechanism 22 includes a supply reel 41, carrying the liner blank 26, and a take-up reel 42 for winding the liner blank 26 from which the liners 15, 15 have been punched out. The supply reel 41 is rotationally driven by a first driving motor 43, whilst the take-up reel 42 is rotationally driven by a second driving motor 44. The supply reel 41 and the take-up reel 42 are arranged above the transporting mechanism 21. On both sides of the position of punching the liners 15, 15 from the liner blank 26 are arranged first guide rolls 45, 46 and second guide rolls 47, 48 so that the major surface of the liner blank 26 will face the inner surfaces of the upper and lower cartridge halves 2, 3 transported by the transporting mechanism 21. The first guide rolls 45, 46 bend the running path of the liner blank 26 fed from the supply reel 41 by approximately 90° to parallel to the transporting mechanism 21, while the second guide rolls 47, 48 bend the running path of the liner blank 26, rendered substantially parallel to the transporting mechanism 21, towards the take-up reel 42, so that the liner blank 26 will be wound on the take-up reel 42. The second guide rolls 47, 48 in cooperation with the first driving motor 43 adapted to run the supply reel 41 in rotation affords a pre-set tension to the liner blank 26 so that the liner 15 will be punched at a position in which the major surface of the liner blank 26 is substantially parallel to the transporting mechanism 21.

By the first and second driving motors 43, 44 being run in rotation, the liner blank feed mechanism 22 causes the liner blank 26 to be run in the same direction as the transporting direction of the upper and lower cartridge halves 2, 3, as indicated by arrow C in Fig.4. The liner blank 26, reeled out from the supply reel 41, has its running path bent by approximately 90° by the first guide rolls 45, 46, so that it is run in a state substantially parallel to the transporting mechanism 21. During this time, the liners 15 are punched off from the liner blank 26 by the liner blank feed mechanism 23. When the liners 15 are punched off, the liner blank 26 has its running path bent by approximately 90° by the second guide rolls 47, 48 and is taken up on the take-up reel 42. The second guide rolls 47, 48 in cooperation with the first driving motor 43 rotationally driving the supply reel 41 affords a pre-set tension to the liner blank 26 so that the liners 15 will be punched in a direction parallel to the transporting mechanism 21.

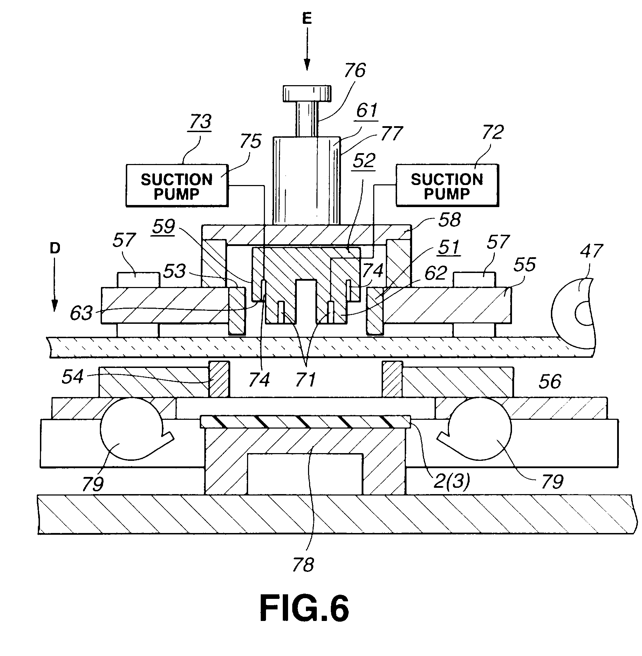

On the downstream side of the center plate mounting mechanism 40 of the transporting mechanism 21, there is mounted, at a position of punching the liners 15 from the liner blank 26, a liner punching mechanism 23 for punching the liners 15 from the liner blank 26 in succession and for arraying the punched liners 15 on the upper and lower cartridge halves 2, 3, as shown in Fig.4. This liner punching mechanism 23 includes a metal mold mechanism 51 for punching the liner 15 from the liner blank 26 and a liner holding head mechanism 52 for arranging the liners 15 punched from the liner blank 26 by the metal mold mechanism 51 on the liner arranging potions 16, 16 of the upper and lower cartridge halves 2, 3, as shown in Fig.6.

The metal mold mechanism 51 for punching the liners 15 from the liner blank 26 includes an upper metal mold 53 operating as a punching metal mold for punching the liners 15 from the liner blank 26, as shown in Fig.6. The upper metal mold 53 in its entirety is formed as a ring ofa diameter approximately equal to the outer diameter of the liner 15 and includes a cutter for punching the liner blank 26 on its outer rim. On the lower side of the upper metal mold 53 is arranged a lower metal mold 54 with the interposition of the liner blank 26 which is in a substantially plan-parallel position as is the transporting mechanism 21. The lower metal mold 54 has its inner diameter substantially in a ring shape as the outer diameter of the upper metal mold 53. The lower metal mold 54 is arranged as a ring having an inner diameter substantially equal to the outer diameter of the upper metal mold 53. The liners are punched from the liner blank 26 by the upper metal mold 53 fitting to the lower metal mold 54.

Around the upper metal mold 53 for punching the liner punching mechanism 23 in cooperation with the lower metal mold 54 is arranged a thrusting plate 55 adapted to thrust the liner blank 26 in punching the liners from the liner blank 26. The lower metal mold 54 is arranged a base plate 56 operating as a support for the liner blank 26 pressured by the thrusting plate 55. The thrusting plate 55 arranged on the upper metal mold 53 is supported by guide shafts 57, 57 so that the upper metal mold 53 is movable in a direction towards and away from the lower metal mold 54 for punching the liners from the liner blank 26. By the upper metal mold 53 being moved in the direction indicated by arrow D in Fig.5 for approaching to the lower metal mold 54, the liner blank 26 around the punching position is pressured against the base plate 56 by the thrusting plate 55. Simultaneously, the upper metal mold 53 is fitted into the lower metal mold 54 to punch the liners 15 from the liner blank 26.

The thrusting plate 55 arranged on the upper metal mold 53 is provided with a holder 58 for holding the liner holding head mechanism 52. The liner holding head mechanism 52, held by the holder 58, includes a holding head 59 for holding the liners 15 punched from the liner blank 26 by the metal mold mechanism 51, and a driving unit 61 for causing movement of the holding head 59 in a direction approaching to the upper and lower cartridge halves 2, 3 held by the holding units 32, 32 of the transporting mechanism 21, as shown in Fig.6.

The holding head 59, holding the liners 15 punched from the liner blank 26, is arranged for sliding in the ring-shaped upper metal mold 53, as shown in Figs.5 and 6. This holding head 59 has a liner holding portion 62, carrying a holding surface adapted to contact with and hold the liner 15. On the outer rim side of the 162 is formed a cut-out 63.

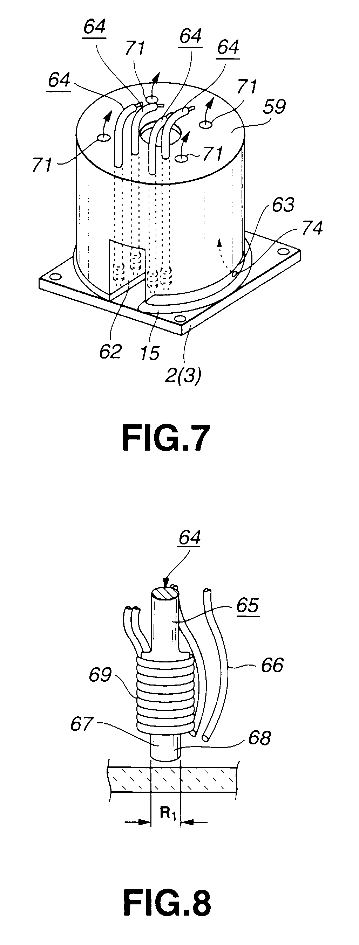

This liner holding portion 62 is provided with a provisional bonding mechanism 64 for provisionally bonding the liner 15 to the liner arranging potions 16, 16 of the upper and lower cartridge halves 2, 3, as shown in Figs.7 and 8. The provisional bonding mechanism 64 includes an impulse heater 65 for heating the heat-sensitive adhesive layer 19 of the liner 15 and a cooling pipe 66 for cooling and solidifying the heat-sensitive adhesive layer 19 heated and fused by the impulse heater 65. The impulse heater 65 is buried in the liner holding portion 62 and a high frequency coil 69 is wound about the core 67 having a diameter of 1 to 2 mm. The distal end 68 of the core 67 is heated to a temperature capable of fusing the heat-sensitive adhesive layer 19, that is 120 to 140°C, preferably 125 to 135°C. By the heat-sensitive adhesive layer 19 being heated by the impulse heater 65 and pressured against the liner arranging potions 16, 16, with the cooling air being ejected simultaneously, the cooling pipe 66 solidifies the heat-sensitive adhesive layer 19 instantaneously to"complete the provision adhesion of the liner 15.

The liner holding portion 62 is provided with plural suction holes 71 for sucking and holding the liner 15. The suction hole 71 is connected to the suction pump 72, such that, when the suction pump 72 is driven simultaneously with the punching of the liner blank 26 by the metal mold mechanism 51, the liner 15 is sucked and held until the liner 15 is arranged in the liner arranging potions 16, 16 of the upper and lower cartridge halves 2, 3.

Around the liner holding portion 62 is formed a cut-out 63 in which is arranged a first suction mechanism 73 adapted to suck fiber fragments produced on punching the liner blank 26. The first suction mechanism 73 includes a suction pipe 74, arranged with its one end facing the cut-out 73, and a suction pump 75 connected to the suction pipe 74, and sucks the fiber fragments produced in the metal mold mechanism 51 on punching the liner blank 26 by the suction pipe 74 by actuating the suction pump 75. Thus, it is possible to prevent the fiber fragments produced on punching the liner blank 26 from becoming attached to the liner 15 punched by the metal mold mechanism 51.

The driving unit 61 for moving the holding head 59 in the direction of approaching to the upper and lower cartridge halves 2, 3 transported by the transporting mechanism 21 as indicated by arrow E in Fig.6 is a cylinder mechanism shown in Fig.6, and is configured so that a piston 76 having its one end attached to the holding head 59 is moved in the direction indicated by arrow E in Fig.5 relative to the cylinder 77 to move the holding head 59 towards the upper and lower cartridge halves 2, 3 to get the liners 15 on the holding unit 59 held by the liner arranging potions 16, 16 of the upper and lower cartridge halves 2, 3.

The upper and lower cartridge halves 2, 3 are supported on a supporting block 78 at the liner arranging position. Around a supporting block 78 supporting the upper and lower cartridge halves 2, 3, on which to arrange the liners 15, there is arranged a second suction unit 79 for sucking fiber fragments produced on punching the liner blank 26 when arranging the liner 15 in the liner arranging potions 16, 16 of the upper and lower cartridge halves 2, 3. That is, the liner produced on punching the liner blank 26 has sucked thereto fiber fragments produced on punching the liner blank 26.

The manner in which the above-described liner punching mechanism 23 punches the liner 15 from the liner blank 26 to place the liners 15 punched in succession on the upper and lower cartridge halves 2, 3 is as follows: First, the upper metal mold 53 is moved in the direction approaching to the lower metal mold 54, as indicated by arrow D in Fig.5, as shown in Fig.6. This pressures the portion of the liner blank 26 around the punching position against the base plate 56 by the thrusting plate 55. Simultaneously, the upper metal mold 53 is fitted into the lower metal mold 54 to punch the liner blank 26 in the form of a liner 15.

At the same time as the upper metal mold 53 is moved in the direction indicated by arrow D in Fig.6, the holding head 59, holding the liner 15, and which constitutes the liner holding head mechanism 52, is moved in the direction towards the upper and lower cartridge halves 2, 3, as indicated by arrow E in Fig.6. At the same time as the liner blank 26 is punched, the holding head 59 sucks and holds the punched liner 15 until it is arranged in the liner arranging potions 16, 16 of the upper and lower cartridge halves 2, 3. Simultaneously the suction mechanism 79 of the first suction mechanism 73 sucks the fiber fragments, produced on punching the liner blank 26, to prevent the fiber fragments from becoming affixed to the liner 15 or to the liner arranging potions 16, 16.

When the holding head 59, holding the liner 15, is moved in the direction towards the upper and lower cartridge halves 2, 3 as indicated by arrow E in Fig.6, to put the liner 15 in the liner arranging potions 16, 16 of the upper and lower cartridge halves 2, 3 supported by the supporting base 78, the impulse heater 65 of the provisional bonding mechanism 64, embedded in the holding head 59, heats and fuses the heat-sensitive adhesive layer 19 of the liner 15. The cooling air then is ejected from the cooling pipe 66 to solidify the heat-sensitive adhesive layer 19 instantaneously to tackify the liner 15. The operation of the suction pump 72 then is halted to cause movement in the direction away from the upper and lower cartridge halves 2, 3 supported on the supporting base 78, that is in a direction opposite to that indicated by arrow E in Fig.6.

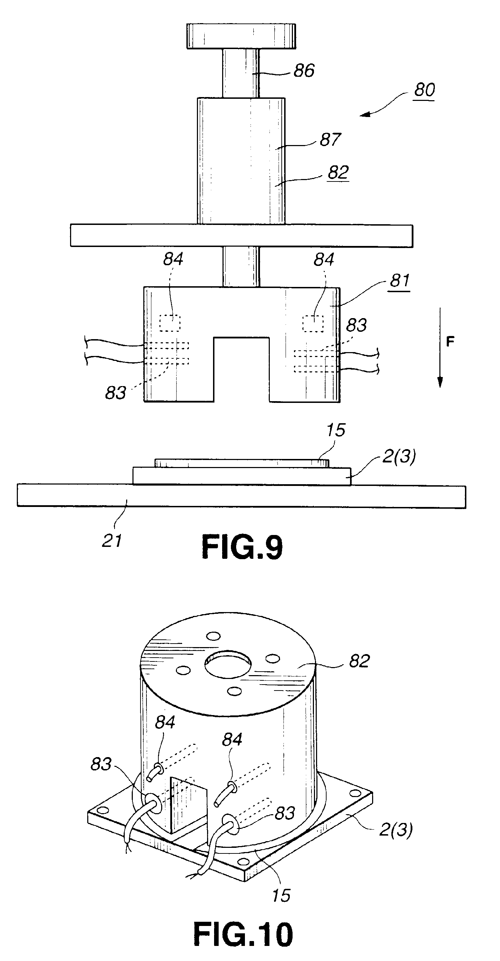

On the downstream side of the liner punching mechanism 23 of the transporting mechanism 21 is arranged a bonding mechanism 80 for ultimately bonding the liner 16 tackified to the liner arranging potions 16, 16 of the upper and lower cartridge halves 2, 3, as shown in Figs.9 and 10. This bonding mechanism 80 includes a welding head 81 for ultimately welding the liners 15, tackified to the liner arranging potions 16, 16 of the upper and lower cartridge halves 2, 3, and a driving unit 85 for moving the w81 in a direction towards and away from the upper and lower cartridge halves 2, 3 to which the liner 15 has been tackified, as shown in Figs.9 and 10.

The welding head 81 for ultimately bonding the liner 15 to the liner arranging potions 16, 16 of the upper and lower cartridge halves 2, 3 includes a main head portion 82 formed with a thrusting surface slightly larger than the outer diameter of the liner 15 which is tackified to the liner arranging potions 16, 16 of the upper and lower cartridge halves 2, 3. In the main head portion 82 is embedded a heater 83 adapted for heating the heat-sensitive adhesive layer 19 provided on the liner 15. The heater 83 heats the welding head 81 to a range of 120 to 140°C and preferably from 125 to 135°C capable of fusing the heat-sensitive adhesive layer 19 of the liner 19. In the main head portion 82 is embedded a heat sensor 84 adapted for detecting the heating temperature of the main head portion 82.

The driving unit 85, adapted for moving the welding head 81 in a direction of approaching to the upper and lower cartridge halves 2, 3 as indicated by arrow F in Fig.9, comprises a cylinder mechanism, as shown in Fig.9. A piston 86, mounted at its end to the welding head 81, is moved in the direction indicated by arrow F in Fig.8 relative to the cylinder 87, to cause the welding head 81 to be moved towards the upper and lower cartridge halves 2, 3 to contact the welding head 81 with the liner 15.

In the above-described welding head 81, when the liner 15 is transported by the transporting mechanism 21 to the position of ultimately bonding the liner 15 to the liner arranging potions 16, 16, the driving unit 85 is actuated to cause the movement of the welding head 81 in the direction indicated by arrow F in Fig.9. The welding head 81 thrusts the liner 15, tackified to the liner arranging potions 16, 16 of the upper and lower cartridge halves 2, 3, against the liner arranging potions 16, 16. The welding head 81 at this tune is heated by the heater 83 and, as the liner 15 is thrust against the liner arranging potions 16, 16, the heat-sensitive adhesive layer 19 is heated and fused to effect ultimate bonding of the liner 15 to the liner arranging potions 16, 16. The welding head 81 then is moved away from the upper and lower cartridge halves 2, 3, to which the liners 15 have been bonded ultimately, in a direction opposite to the direction indicated by arrow F in Fig.9.

The operation of the above-described liner bonding apparatus 20 and the method of bonding the liner 15 by the liner bonding apparatus 20 are hereinafter explained.

In the transporting mechanism 21, the upper and lower cartridge halves 2, 3 are transferred one-by-one by the cartridge half supplying mechanism 37 arranged on the inchoate end of the transporting mechanism 21, as shown in Fig.4. The upper and lower cartridge halves 2, 3 are intermittently transported by the transporting mechanism 21, in the direction indicated by arrow A in Fig.4, in such a state in which the cartridge halves are arrayed in a direction substantially perpendicular to the direction of transporting the upper and lower cartridge halves 2, 3.

To the upper cartridge half 2, among the upper and lower cartridge halves 2, 3, held by the holding units 32, 32, the center plate 11 is mounted at a position facing the center opening 9 of the lower cartridge half 3 by the center plate mounting mechanism 40.

Referring to Fig.4, the liner blank feed mechanism 22 causes the liner blank 26 to be fed in the same direction as the transporting direction of the upper and lower cartridge halves 2, 3, that is in the direction indicated by arrow C in Fig.4, by the first and second driving motors 43, 44 being run in rotation. When the liner blank 26 is reeled out from the supply reel 41, the running path is bent by approximately 90° by the first guide rolls 45, 46, so that the liner blank 26 is run with its major surface substantially parallel to the transporting mechanism 21. At this time, the liner 15 is punched off from the liner blank feed mechanism 22. When the liner 15 is punched, the liner blank 26 has its running path bent approximately 90° by the second guide rolls 47, 48 before being wound about the take-up reel 42. The second guide rolls 47, 48 afford a pre-set tension to the liner blank 26, in cooperation with the first driving motor 43 adapted to run the supply reel 41 in rotation, so that the liner is punched from the liner blank 26 lying plan-parallel to the transporting mechanism 21.

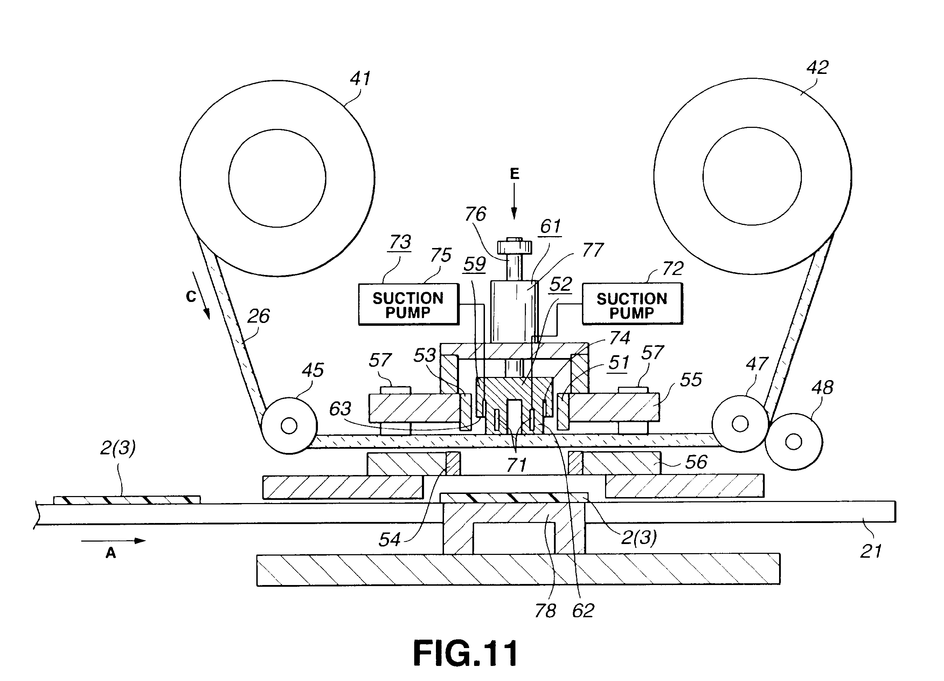

When the upper and lower cartridge halves 2, 3, of which the upper cartridge half 2 mounts the center plate 11, is run in the direction indicated by arrow A in Fig.4, the liner 15 is tackified to the upper and lower cartridge halves 2, 3, as shown in Figs. 11 to 14. That is, when the upper and lower cartridge halves 2, 3 are transported by the transporting mechanism 21 to a position of provisionally bonding the liner 15, the upper metal mold 53 and the lower metal mold 54 are separated away from each other, with the liner blank 26 being interposed between the upper metal mold 53 and the lower metal mold 54, as shown in Fig.11. The holding head 59, sucking and holding the liner 15, punched form the liner blank 26, is positioned with the holding surface holding the liner 15 by suction being flush with the end face towards the cutter portion of the upper metal mold 53.

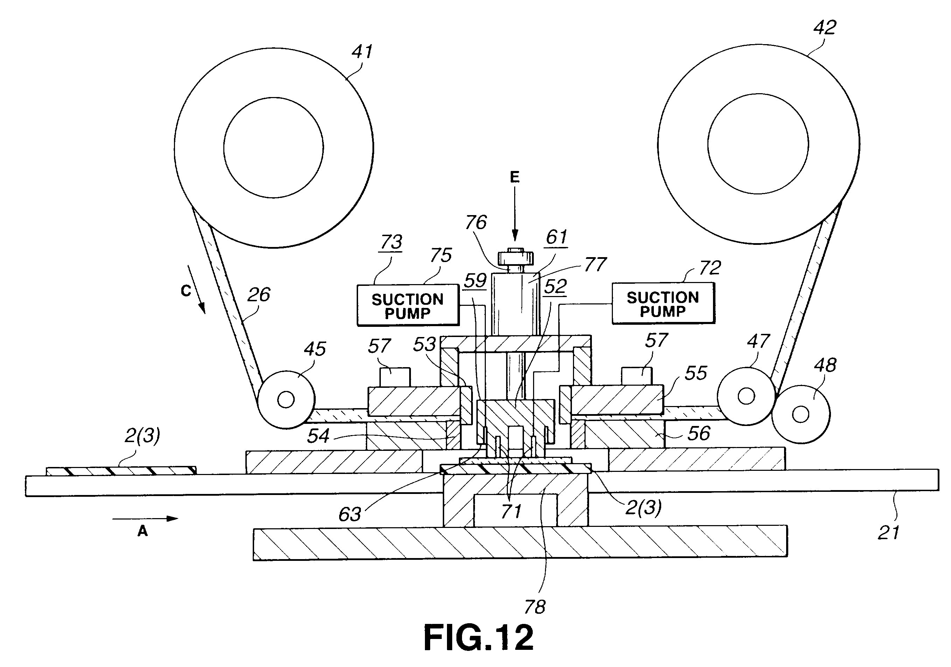

Referring to Fig. 12, the upper metal mold 53 is moved in a direction approaching to the lower metal mold 54 as indicated by arrow D in Fig.6, the upper metal mold 53 causes the thrusting plate 55 to thrust the portion of the liner blank 26 around the punching position against the base plate 56 to sandwich the liner blank 26 by the second guide rolls 47, 48 and the first driving motor 43 rotationally driving the supply reel 41 as the tension afforded to the liner blank 26 is kept. Simultaneously, the upper metal mold 53 fits into the lower metal mold 54 to punch the liner blank 26 in the form of the liner 15.

The upper metal mold 53 is moved in the direction indicated by arrow D in Fig. 12, at the same tune as the holding head 59 holding the liner 15 of the liner holding head mechanism 52 is moved towards the upper and lower cartridge halves 2, 3 in the direction indicated by arrow E in Fig. 12. The suction pump 72 is driven, at the same time as the liner blank 26 is punched, so that the holding head 59 holds the liner 15 until the latter is arranged in the liner arranging potions 16, 16 of the upper and lower cartridge halves 2, 3. Simultaneously, the first suction mechanism 73 and the second suction unit 79 suck the fiber fragments, produced on punching the liner blank 26, to prevent the fiber fragments from becoming attached to the liners 15 or to the liner arranging potions 16, 16.

When the holding head 59 holding the liner 15 is moved towards the upper and lower cartridge halves 2, 3 in the direction indicated by arrow E in Fig.4, and the liners 15 are arranged in the liner arranging potions 16, 16 of the upper and lower cartridge halves 2, 3 carried by the supporting base 78, the impulse heater 65 of the provisional bonding mechanism 64 embedded in the holding head 59 heats and fuses the heat-sensitive adhesive layer 19 of the liner 15. The cooling air then is ejected from the cooling pipe 66 to solidify the heat-sensitive adhesive layer 19 instantaneously to tackify the liner 15.

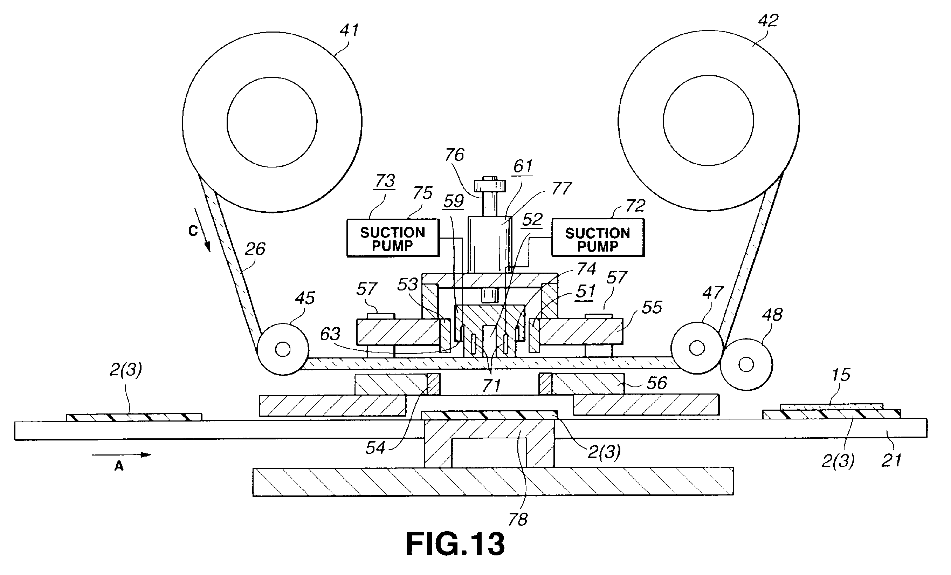

When the provisional bonding of the liners 15 comes to a close, the suction pump 72 ceases to be driven to halt the suction of the liner 15 so that the holding head 59 which has held the liner 15 is moved away from the upper and lower cartridge halves 2, 3 carried by the supporting base 78 in the direction opposite to that indicated by arrow E in Fig.13. The upper metal mold 53 also is moved in the direction opposite to that indicated by arrow E in Fig. 13 to permit the liner blank 26 to run between the upper metal mold 53 and the lower metal mold 54. The liner blank 26, from which the liner 15 has been punched off, is taken up on the take-up reel 42.

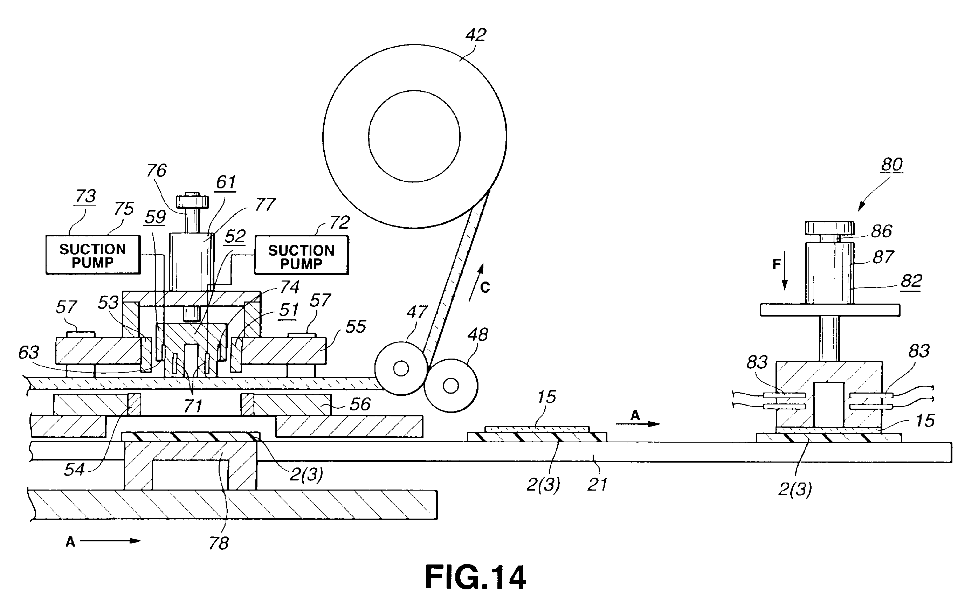

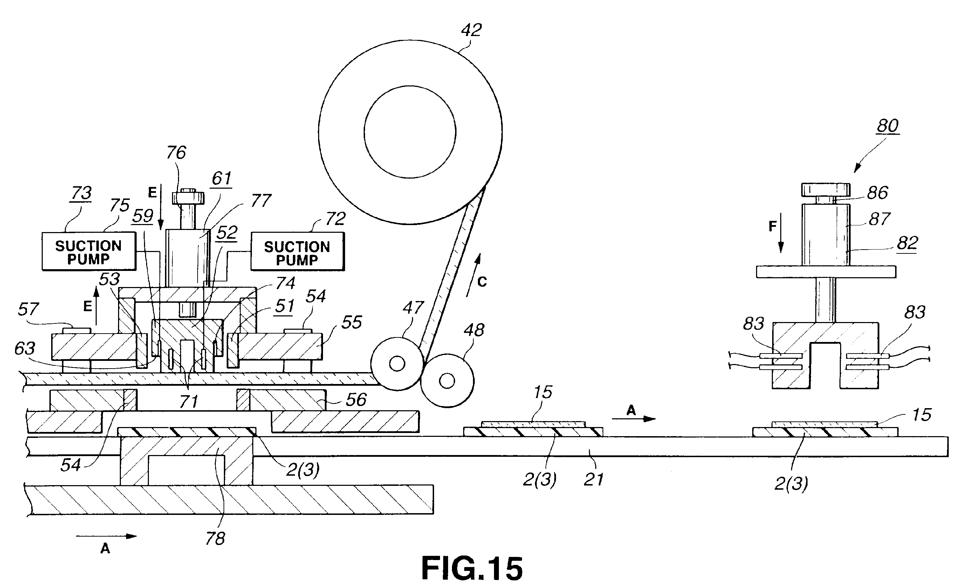

When the upper and lower cartridge halves 2, 3, to which the liners have been tackified, are transported by the transporting mechanism 21 to the position of being ultimately bonded to the liner arranging potions 16, 16, the driving unit 85 is driven to move the welding head 81 in the direction indicated by arrow F in Fig.15. The welding head 81 thrusts the liners 15, tackified to the liner arranging potions 16, 16 of the upper and lower cartridge halves 2, 3, against the liner arranging potions 16, 16. Th welding head 81 is heated at this time by the heater 83, and thrusts the liners 15 against the liner arranging potions 16, 16, at the same time as it heats and fuses the heat-sensitive adhesive layer 19 to ultimately bond the liner 15 to the liner arranging potions 16, 16. The welding head 81 then is moved away from the upper and lower cartridge halves 2, 3, to which the liners 15 have been tackified as described above, in the direction opposite to that shown by arrow F in Fig.14.

At the next step, the magnetic disc 5 is arranged in one of the upper and lower cartridge halves 2, 3, to which the liners 15 have been affixed as described above. The upper and lower cartridge halves 2, 3 are then abutted and connected to each other. The shutter member 14 is mounted on the font side of the main cartridge body unit 4, constructed by abutting and bonding the upper and lower cartridge halves 2, 3 together, to complete the disc cartridge 1.

In the above-described liner bonding apparatus 20, the liner blank 26 is run so that it faces the upper and lower cartridge halves 2, 3 at the liner punching position, and the liner punching mechanism 23 is arranged above the liner punching position, the apparatus in its entirety can be reduced in size. Moreover, in the liner bonding apparatus, in which the liner punching mechanism 23 is arranged above the liner punching position, and the liners 15 punched from the liner blank 26 are arranged on the liner arranging potions 16, 16 of the upper and lower cartridge halves 2, 3, in succession to the punching of the liner blank 26, it is possible to shorten the mounting time for the liners 15.

## Claims

1. A liner bonding apparatus, comprising:
a transporting mechanism having a holding mechanism for holding a cartridge half on which a liner is to be mounted, said transporting mechanism being configured to sequentially transport said cartridge half held by said holding mechanism;
a liner feed mechanism for sequentially running a liner blank so that said liner black faces the inner surface of said cartridge half held by said holding mechanism at least at a position of punching said liner blank to a pre-set shape; and
a liner punching mechanism arranged for movement in a direction substantially perpendicular to the major surface of said liner blank at said punching position, said liner punching mechanism being moved in said punching direction at said punching position to punch said liner blank to a pre-set shape, said liner punching mechanism being moved in succession in said punching direction to arrange said punched liner on said inner surface of said cartridge half held by said holding mechanism.

2. The liner bonding apparatus according to claim 1, wherein said liner punching mechanism includes a punching mold moved in said punching direction to punch said liner blank and a liner holding head for holding said punched liner, said liner holding head being moved relative to said punching head in said punching direction to mount said punched liner on said cartridge half held by said holding mechanism, said liner holding head heating and fusing a heat-sensitive adhesive layer formed on a mounting side of said liner on said cartridge half to bond said liner on said inner surface of said cartridge half.

3. The liner bonding apparatus according to claim 2, wherein said liner holding head has a provisional bonding mechanism which, when said liner is arranged on said inner surface of said cartridge half held by said holding mechanism, partially heats and fuses said heat-sensitive adhesive layer of said liner to provisionally bond said liner to said inner surface of said cartridge half.

4. The liner bonding apparatus according to claim 3, wherein said provisional bonding mechanism is an impulse heater.

5. The liner bonding apparatus according to claim 3, further comprising a bonding mechanism arranged downstream of said liner punching mechanism in relation to said transporting mechanism, said bonding mechanism being adapted to thrust said liner arranged in said cartridge half held by said holding mechanism, said bonding mechanism heating and fusing said heat-sensitive adhesive layer of said liner on said cartridge half to ultimately bond said liner to said inner surface of said cartridge half.

6. The liner bonding apparatus according to claim 2, wherein said liner holding head has a suction mechanism for sucking fiber fragments produced on punching said liner blank.

7. The liner bonding apparatus according to claim 2, further comprising a further suction mechanism at a liner mounting position around said holding mechanism holding said cartridge half in which said liner is arranged, said further suction mechanism being configured to suck fiber fragments produced on punching said liner from said liner blank.

8. A liner bonding method, comprising the steps of:
holding a cartridge half by a holding mechanism and sequentially transporting said cartridge half, said cartridge half being adapted to hold a liner therein;
running a liner blank so that said liner blank faces said cartridge half held by said holding mechanism at a punching position of punching said liner blank to a pre-set shape;
moving said liner blank punching mechanism in a punching direction substantially perpendicular to the major surface of said liner blank at said punching position to punch said liner blank;
moving said punching mechanism in succession in said punching direction, after punching said liner blank to a pre-set shape, to mount said liner in said cartridge half held by said holding mechanism; and
partially heating and fusing in succession a heat-sensitive adhesive layer formed on a mounting surface of said liner on said cartridge half, after mounting said liner by said punching mechanism on said inner surface of said cartridge half, to provisionally bond said liner on said inner surface of said cartridge half, or heating and fusing said heat-sensitive adhesive layer to ultimately bond said liner on said inner surface of said cartridge half.

9. The liner bonding method according to claim 8, wherein said liner is tackified and ultimately bonded to said inner surface of said cartridge half.

10. The liner bonding method according to claim 8, wherein, in said provisional bonding or ultimate bonding of said liner, a head for bonding said liner to said inner surface of said cartridge half by heating and fusing said heat-sensitive adhesive layer is set to a temperature of 120 to 140°C.
